(19) Europäisches Patentamt
European Patent Office
Office européen des brevets

(11) **EP 3 432 487 B1**

(12) **FASCICULE DE BREVET EUROPEEN**

(45) Date de publication et mention
de la délivrance du brevet:
**23.10.2019 Bulletin 2019/43**

(51) Int Cl.:
**H04B 10/112** *(2013.01)*  **H04B 10/114** *(2013.01)*
**H04B 10/116** *(2013.01)*

(21) Numéro de dépôt: **18184784.9**

(22) Date de dépôt: **20.07.2018**

(54) **MÉTHODE D'ORDONNANCEMENT POUR VOIES MONTANTE ET DESCENDANTE D'UN SYSTÈME DE TRANSMISSION OPTIQUE**

STEUERUNGSVERFAHREN FÜR ANSTEIGENDE UND ABFALLENDE BAHNEN EINES OPTISCHEN ÜBERTRAGUNGSSYSTEMS

SCHEDULING METHOD FOR UPLINK AND DOWNLINK CHANNELS OF AN OPTICAL TRANSMISSION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2017 FR 1756914**

(43) Date de publication de la demande:
**23.01.2019 Bulletin 2019/04**

(73) Titulaire: **Commissariat à l'énergie atomique et aux énergies alternatives**
**75015 Paris (FR)**

(72) Inventeurs:
• **MIRAS, David**
  **38140 FROGES (FR)**
• **MARET, Luc**
  **38210 POLIENAS (FR)**
• **MAMAN, Mickaël**
  **38000 GRENOBLE (FR)**

(74) Mandataire: **Brevalex**
  **56, Boulevard de l'Embouchure**
  **B.P. 27519**
  **31075 Toulouse Cedex 2 (FR)**

(56) Documents cités:
  **US-A1- 2011 105 134    US-A1- 2011 217 044**

## Description

## DOMAINE TECHNIQUE

La présente invention concerne de manière générale le domaine des communications optiques sans fil et plus particulièrement celui des systèmes de communication Li-Fi (*Light Fidelity*).

## ÉTAT DE LA TECHNIQUE ANTÉRIEURE

Les systèmes de communications optiques sans fil ou OWC (Optical Wireless Communications) ont fait dernièrement l'objet d'importantes recherches en raison de leur capacité à résoudre le problème d'occupation spectrale et à compléter voire à se substituer aux systèmes Wi-Fi.

De manière schématique, les systèmes Li-Fi sont analogues aux systèmes Wi-Fi (obéissant à la norme IEEE 802.11) mais utilisent le spectre visible au lieu du spectre RF. La couche physique (PHY) et la couche MAC des systèmes Li-Fi ont déjà fait l'objet d'une normalisation dans le standard IEEE 802.15.7.

Dans la mesure où les signaux optiques ne traversent pas les cloisons opaques, l'interférence entre les cellules séparées par de telles cloisons est inexistante. Toutefois, lorsque ces cellules Li-Fi sont déployées dans un espace libre, il est nécessaire de supprimer l'interférence entre cellules adjacentes.

Une première technique de réduction de l'interférence intercellulaire d'un système de télécommunication optique consiste à adopter un schéma de réutilisation de fréquence (*frequency reuse pattern*). Ainsi, l'article de C. Chen et al. intitulé « Fractional frequency reuse in optical wireless cellular network » publié dans Proc. of the 2013 24th International Symposium on Personal, Indoor and Mobile Radio Communications, pp. 3594-3598, propose de diviser les cellules en une région centrale, dans laquelle la totalité de la bande peut être utilisée, et une région périphérique, affectée par l'interférence intercellulaire, dans laquelle seules des sous-bandes sont utilisées de manière à ce que deux zones périphériques de deux cellules adjacentes soient couvertes par des sous-bandes distinctes.

Une seconde technique de gestion de l'interférence dans les systèmes de télécommunication optiques consiste à détecter la position spatiale des utilisateurs sous des sources lumineuses puis à fractionner le flux lumineux entre ces utilisateurs dans le domaine temporel. Ainsi, deux utilisateurs spatialement séparés sont servis par des cellules spatialement adaptées en des instants distincts. Cette technique a été décrite dans la proposition de S. Rajagopal et al. intitulée « IEEE 802.15.7 VLC PHY/MAC proposal-Samsung ETRI » IEEE Standard, October 31, 2009. Elle suppose toutefois le déploiement d'un nombre important de sources optiques.

Les documents de brevet US 2011/0105134 A1 et US 2011/0217044 décrivent des systèmes de communication optique sans fil, comprenant des points d'accès et des terminaux aptes à communiquer avec ces points d'accès, lesdits systèmes comportant l'utilisation des identifiants des terminaux et/ou des points d'accès ainsi que l'allocation des plages temporelles pour mettre en oeuvre lesdites communications optiques.

Les techniques précitées ne tiennent pas compte de l'asymétrie des interférences qui peuvent avoir lieu entre les liens montants et les liens descendants.

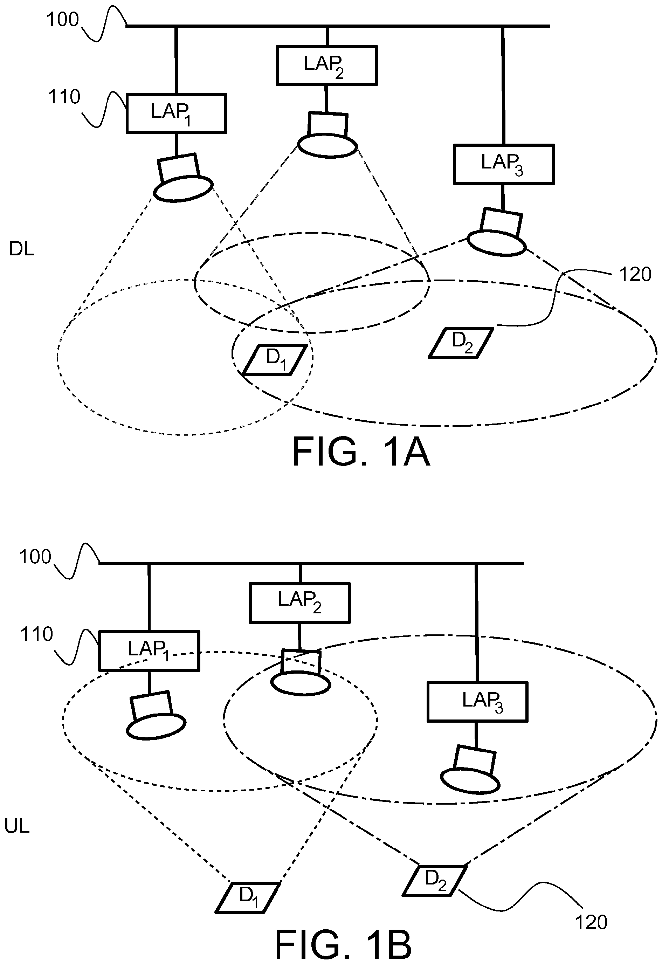

Les Fig. 1A et 1B illustrent de manière schématique un exemple de système de communication optique présentant une asymétrie d'interférence entre la voie montante et la voie descendante.

Le système de télécommunication optique comprend une pluralité de points d'accès lumineux ou APs, 110, connectés au réseau principal, 100, par exemple au moyen de liaisons Ethernet. Chaque point d'accès est équipé d'un modem couplé à une source lumineuse à LED émettant dans le domaine visible, le modem modulant le courant d'alimentation de la source de manière à moduler l'intensité de la lumière émise.

Les terminaux, 120, sont équipés d'un « dongle » incluant un récepteur optique. Ce récepteur optique reçoit le signal lumineux, le convertit en signal électrique, le démodule et récupère les données émises. Inversement, le dongle ou le terminal lui-même est également équipé d'une diode infrarouge, les données à transmettre sur la voie montante servant à moduler le signal infrarouge. Le signal infrarouge est reçu par une photodiode montée sur le point d'accès, puis est démodulé pour transmettre les données via le réseau principal.

Dans l'exemple représenté, on a désigné par $LAP_1, LAP_2, LAP_3$ les points d'accès lumineux et par $D_1, D_2$ les terminaux des utilisateurs.

La Fig. 1A illustre les zones de couverture optique respectives des points d'accès $LAP_1, LAP_2, LAP_3$. On remarque que le terminal $D_1$ est situé dans les zones de couverture de $LAP_1$ et $LAP_3$, et que le terminal $D_2$ est situé dans la seule zone de couverture de $LAP_3$. Ainsi, si le terminal $D_1$ est associé au point d'accès $LAP_1$, la liaison descendante entre $LAP_1$ et $D_1$ est interférée par le signal émis par $LAP_3$ sur la voie descendante.

La Fig. 1B illustre la situation d'interférence correspondante sur la voie montante.

On remarque que le point d'accès $LAP_2$ reçoit les signaux émis par les terminaux $D_1$ et $D_2$ sur la voie montante, alors que les signaux reçus par $LAP_1$ et $LAP_3$, respectivement de $D_1$ et $D_2$ ne sont pas interférés.

De manière générale, les distributions spatiales des zones de couverture sur la voie montante et sur la voie descendante ne sont pas symétriques : le récepteur peut être déporté par rapport à l'émetteur, le diagramme de rayonnement de l'émetteur et le diagramme de réception du récepteur sont rarement équivalents (angle de pointage, directivité). En outre, l'utilisation de composants optiques réfractifs tels que des lentilles peut accroître la directivité des diagrammes de rayonnement, ce qui accentue encore davantage la dissymétrie de l'interférence sur les voies montante et descendante.

Dans une telle situation de dissymétrie, une même stratégie d'allocation de ressources de transmission sur les voies montante et descendante est sous-optimale.

Le but de la présente invention est par conséquent de proposer une méthode de réduction de l'interférence dans un système de télécommunication optique sans fil qui soit simple et efficace tout en prenant en compte la dissymétrie de l'interférence sur les voies montante et descendante.

## EXPOSÉ DE L'INVENTION

La présente invention est définie, selon un premier mode de réalisation, par une méthode d'allocation d'intervalles de transmission dans un système optique sans fil comprenant une pluralité de points d'accès reliés à un réseau filaire et contrôlés par un contrôleur de réseau, et une pluralité de terminaux, dans laquelle :

- à chaque terminal est associé un point d'accès parmi ladite pluralité de points d'accès, tel que la moyenne des qualités des liaisons montante et descendante entre ce point d'accès et ledit terminal soit maximale ;
- chaque terminal associé à un point d'accès détermine une information de couverture contenant les identifiants des points d'accès reçus par le terminal ;
- lorsque l'information de couverture d'un terminal est réduite à l'identifiant du point d'accès associé au terminal, le point d'accès alloue à la liaison descendante un intervalle de transmission dans une plage temporelle disponible gérée par le contrôleur de réseau $\left( CFP_{free}^{down}(AP_n) \right)$ ;
- lorsque l'information de couverture d'un terminal comprend une pluralité d'identifiants de points d'accès, le contrôleur de réseau alloue à la liaison descendante entre le terminal et son point d'accès associé un intervalle de transmission dans une plage temporelle disponible $\left( CFP_{free}^{down}(AP_n) \right)$ et ampute corrélativement les plages temporelles disponibles de l'intervalle de transmission ainsi alloué.

Avantageusement :

- chaque point d'accès détermine une information de réception contenant les identifiants des terminaux reçus par le point d'accès ;
- lorsque l'identifiant d'un terminal n'apparait que dans l'information de réception du point d'accès qui lui est associé, ce dernier alloue à la liaison montante un intervalle de transmission dans une plage temporelle disponible gérée par le contrôleur de réseau $\left( CFP_{free}^{up}(AP_n) \right)$ ;
- lorsque l'identifiant du terminal apparait dans une pluralité d'informations de réception, le contrôleur de réseau alloue à la liaison montante entre le terminal et son point d'accès associé un intervalle de transmission dans une plage temporelle disponible $\left( CFP_{free}^{up}(AP_n) \right)$ et ampute corrélativement les plages temporelles disponibles de l'intervalle de transmission ainsi alloué pour tous les points d'accès contenant l'identifiant du terminal dans leur information de réception.

Selon un second mode de réalisation, l'invention est définie par une méthode d'allocation d'intervalles de transmission dans un système optique sans fil, comprenant une pluralité de points d'accès reliés à un réseau filaire et contrôlés par un contrôleur de réseau, et une pluralité de terminaux, dans laquelle :

- à chaque terminal est associé un point d'accès parmi ladite pluralité de points d'accès, tel que la qualité de la liaison montante ledit terminal et ce point d'accès soit maximale ;
- chaque terminal associé à un point d'accès détermine une information de couverture contenant les identifiants des points d'accès reçus par le terminal ainsi que des indicateurs de qualité de liaison descendante avec ces points d'accès, ladite information de couverture étant remontée au contrôleur de réseau via les points d'accès ;
- lorsque l'information de couverture d'un terminal est réduite à l'identifiant du point d'accès associé au terminal, le point d'accès alloue à la liaison descendante un intervalle de transmission dans une plage temporelle disponible gérée par le contrôleur de réseau $\left( CFP_{free}^{down}(AP_n) \right)$ ;
- lorsque l'information de couverture comprend une pluralité d'identifiants de points d'accès, le contrôleur de réseau détermine parmi ladite pluralité un point d'accès auxiliaire tel que la qualité de la liaison descendante entre le point d'accès auxiliaire et le terminal soit maximale, la liaison descendante entre le point d'accès associé et le terminal comprenant une première liaison à travers le réseau filaire entre le point d'accès associé et le point d'accès auxiliaire et une seconde liaison descendante entre le point d'accès auxiliaire et le terminal ;
- le contrôleur de réseau alloue à la seconde liaison descendante entre le point d'accès auxiliaire et le terminal un intervalle de transmission dans une plage temporelle disponible $\left( CFP_{free}^{down}(AP_n) \right)$ et ampute corrélativement les plages temporelles disponibles des points d'accès appartenant à l'information de couverture de l'intervalle de transmission ainsi alloué.

Selon un troisième mode de réalisation, l'invention est définie par une méthode d'allocation d'intervalles de transmission dans un système optique sans fil, comprenant une pluralité de points d'accès reliés à un réseau filaire et contrôlés par un contrôleur de réseau, et une pluralité de terminaux, dans laquelle :

- à chaque terminal est associé un point d'accès parmi ladite pluralité de points d'accès, tel que la qualité de la liaison descendante entre ce point d'accès et ledit terminal soit maximale ;
- chaque point d'accès détermine une information de réception contenant les identifiants des terminaux reçus par le point d'accès ainsi que des indicateurs de qualité de liaison montante avec ces terminaux, ladite information de réception étant transmise au contrôleur de réseau ;
- lorsque l'identifiant d'un terminal n'apparait que dans l'information de réception du point d'accès qui lui est associé, ce dernier alloue à la liaison montante un intervalle de transmission dans une plage temporelle disponible gérée par le contrôleur de réseau $\left( CFP_{free}^{up}(AP_n) \right)$ ;
- lorsque l'identifiant d'un terminal apparait dans une pluralité d'informations de réception de points d'accès, le contrôleur de réseau détermine parmi ladite pluralité un point d'accès auxiliaire tel que la qualité de la liaison montante entre le terminal et ce point d'accès auxiliaire soit maximale, la liaison montante entre le terminal le point d'accès associé comprenant une première liaison montante entre le terminal et le point d'accès auxiliaire et une seconde liaison dans le réseau filaire entre le point d'accès auxiliaire et le point d'accès associé.

Quel que soit le mode de réalisation, le système optique est de préférence conforme au standard IEEE 802.15.7.

## BRÈVE DESCRIPTION DES DESSINS

D'autres caractéristiques et avantages de l'invention apparaîtront à la lecture d'un mode de réalisation préférentiel de l'invention, fait en référence aux figures jointes parmi lesquelles :

Les Figs. 1A et 1B représentent de manière schématique un exemple de système de télécommunication optique présentant une asymétrie d'interférence sur la voie montante et la voie descendante ;
La Fig. 2 représente de manière schématique un système de télécommunication optique présentant une topologie coordonnée ;
La Fig. 3 représente de manière schématique la structure d'une supertrame utilisée dans un système de télécommunication optique ;
La Fig. 4A représente de manière schématique un diagramme d'interférences entre points d'accès d'un système de télécommunication optique sans fil ;
La Fig. 4B représente un graphe d'interférence des points d'accès pour le système de télécommunication optique sans fil de la Fig. 4A ;
La Fig. 4C représente un exemple d'allocation d'intervalles de transmission pour le système de télécommunication optique sans fil de la Fig. 4A ;
La Fig. 5 représente l'ordinogramme d'une allocation d'intervalles de transmission de signaux de contrôle dans un système de télécommunication optique sans fil, pouvant être mise en œuvre dans l'un quelconque des modes de réalisation de l'invention ;
La Fig. 6A représente l'ordinogramme d'une méthode d'allocation d'intervalles de transmission pour les liaisons descendantes d'un système de télécommunication optique sans fil, selon un premier mode de réalisation de l'invention ;
La Fig. 6B représente l'ordinogramme d'une méthode d'allocation d'intervalles de transmission pour les liaisons montantes d'un système de télécommunication optique sans fil, selon un premier mode de réalisation de l'invention ;
La Fig. 7 représente l'application de la méthode d'intervalles de transmission, selon le premier mode de réalisation de l'invention, au système de télécommunication optique sans fil des Figs 1A et 1B ;
La Fig. 8 représente l'application d'une méthode d'allocation d'intervalles de transmission, selon un deuxième mode de réalisation de l'invention, au système de télécommunication optique sans fil des Figs 1A et 1B ;
La Fig. 9 représente l'application d'une méthode d'allocation d'intervalles de transmission, selon un troisième mode de réalisation de l'invention, au système de télécommunication optique sans fil des Figs 1A et 1B.

## EXPOSÉ DÉTAILLÉ DE MODES DE RÉALISATION PARTICULIERS

On considérera dans la suite un réseau de communication optique sans fil (Li-Fi), tel que décrit par exemple dans la norme IEEE 802.15.7r1. Ce réseau comprend une pluralité de points d'accès reliés à un réseau de backhaul.

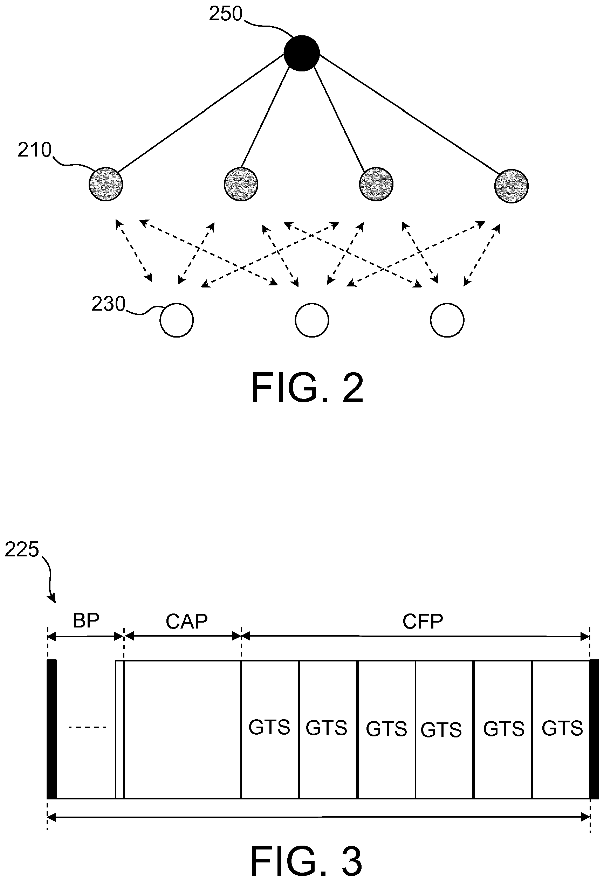

On suppose que ce réseau dispose d'un mécanisme de gestion centralisée des interférences. Comme illustré en Fig. 2, les points d'accès du réseau (encore appelés coordinateurs), 210, sont reliés à un contrôleur de réseau (*global controller*), 250, au moyen du réseau de backhaul, selon une topologie coordonnée, au sens de la norme précitée. Plus précisément, chaque terminal 230 est capable de détecter une interférence entre des signaux reçus de deux points d'accès et de remonter un rapport d'interférence (une métrique) au contrôleur de réseau, 250, via ledit point d'accès. De manière similaire, chaque point d'accès 210 est capable d'analyser le niveau d'interférence entre des signaux émis par deux terminaux et de transmettre un rapport d'interférence au contrôleur de réseau 250. En fonction des rapports d'interférence sur la voie descendante et la voie montante, le contrôleur de réseau transmet aux points d'accès, via le réseau de backhaul, une allocation temporelle d'intervalles de transmission de signaux de contrôle, comme décrit en détail plus loin.

Le contrôleur de réseau a notamment pour fonction de synchroniser l'émission des supertrames par les points d'accès et de leur allouer un accès au médium selon un mécanisme de répartition dans le temps (TDMA).

Plus précisément, la transmission sur la voie descendante/ montante utilise une structure de supertrame telle que représentée en Fig. 3.

Une supertrame est délimitée par des balises successives émises par chaque point d'accès (dit encore coordinateurs) de manière synchrone. Elle est divisée en trois parties successives : une première partie, dénommée période de contrôle ou BP (*Beacon Period*), dédiée à la transmission de messages de contrôle (sur la voie descendante et sur la voie montante), une deuxième partie ou CAP (*Contention Access Period*) dans laquelle les terminaux peuvent transmettre de manière aléatoire et une troisième partie ou CFP (*Contention-Free Period*), elle-même divisée en intervalles de transmission garantis ou GTSs (*Garanteed Time Slots*) dans lesquels les terminaux (resp. les points d'accès) peuvent transmettre sans risque de conflit d'accès sur la voie montante (resp. sur la voie descendante).

La gestion de l'interférence est réalisée par le contrôleur de réseau qui dans une première étape détermine une table d'interférence (ou matrice d'interférence) entre points d'accès. Cette matrice d'interférence peut être déterminée au préalable à partir d'un relevé des zones de couverture lors du déploiement des différents points d'accès ou bien construite au fur et à mesure à l'aide des rapports d'interférence remontés par les terminaux au contrôleur de réseau, via les points d'accès.

La matrice d'interférence est binaire et symétrique. Elle indique pour chaque couple de points d'accès contrôlés par le contrôleur de réseau s'il existe une intersection des zones de couverture de ces deux points d'accès (que ce soit sur la voie montante ou descendante). L'absence ou l'existence d'une telle intersection est représentée par une valeur binaire.

L'interférence peut être détectée sur la voie descendante ou sur la voie montante. Sur la voie descendante, l'interférence entre point d'accès est détectée à partir des rapports d'interférence des terminaux, remontés au contrôleur de réseau via ces points d'accès. Sur la voie montante, l'interférence est détectée dès lors qu'un point d'accès reçoit d'un terminal un signal qui ne lui est pas destiné. Le rapport d'interférence est alors transmis par le point d'accès en question au contrôleur de réseau. Lorsqu'une interférence entre points d'accès est détectée, que ce soit sur la voie montante ou descendante, cette interférence est considérée comme acquise même si celle-ci n'est plus observée ultérieurement. En effet, on comprend que cette interférence ne sera détectée que pour autant qu'un terminal se trouve dans l'intersection des zones de couverture des points d'accès. La matrice d'interférence garde ainsi une trace des interférences relevées entre les points d'accès au cours du temps.

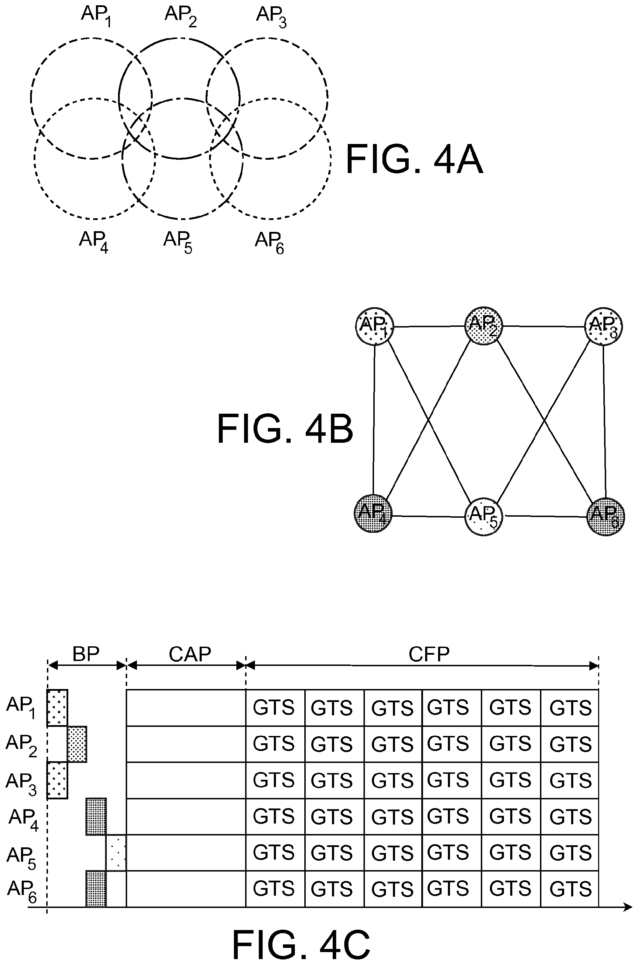

A titre d'exemple, si l'on considère le diagramme d'interférence entre les points d'accès $AP_1,...,AP_6$ de la Fig. 4A, la table d'interférence sera donnée par :

|        | $AP_1$ | $AP_2$ | $AP_3$ | $AP_4$ | $AP_5$ | $AP_6$ |
|--------|--------|--------|--------|--------|--------|--------|
| $AP_1$ | X      | 1      | 0      | 1      | 1      | 0      |
| $AP_2$ | 1      | X      | 1      | 1      | 1      | 1      |
| $AP_3$ | 0      | 1      | X      | 0      | 1      | 1      |
| $AP_4$ | 1      | 1      | 0      | X      | 1      | 0      |
| $AP_5$ | 1      | 1      | 1      | 1      | X      | 1      |
| $AP_6$ | 0      | 1      | 1      | 0      | 1      | X      |

La table (ou matrice) d'interférence peut être considérée comme une matrice d'adjacence d'un graphe, dénommé graphe des incompatibilités, dont les sommets sont les points d'accès du réseau. Selon cette représentation, deux points d'accès interférents sur la voie descendante sont représentés par des sommets adjacents dans le graphe d'incompatibilités.

La Fig. 4B représente le graphe des incompatibilités correspondant au diagramme d'interférence de la Fig. 4A.

Le contrôleur de réseau attribue des intervalles de transmission (intervalles de transmission de signaux de contrôle dans la partie *BP,* intervalles de transmission garantis *GTS* dans la partie *CFP*) aux différents points d'accès, de manière à ce que des points d'accès interférents se voient allouer des intervalles de transmission disjoints. Lorsqu'un point d'accès n'interfère avec aucun de ses voisins, celui-ci peut s'allouer un intervalle de transmission de manière autonome.

L'allocation d'intervalles de transmission par le contrôleur de réseau peut être réalisée au moyen d'un algorithme de coloration du graphe des incompatibilités. Par coloration de graphe, on entend que l'on attribue une couleur à chaque sommet du graphe tout en veillant à ce que deux sommets adjacents ne puissent être de même couleur. On pourra pour ce faire utiliser un algorithme de coloration équitable connu de l'état de la technique, par exemple l'algorithme de Welsh et Powell. Un tel algorithme permet en effet d'assurer que deux sommets adjacents du graphe soient colorés avec des couleurs différentes comme illustré en Fig. 4B. Avantageusement, le nombre de couleurs différentes du graphe sera minimisé.

On a représenté sur la Fig. 4C un exemple d'allocation d'intervalles de transmission, en conformité avec le graphe des incompatibilités de la Fig. 4B. Chaque ligne correspond à un point d'accès et représente une supertrame transmise sur la voie descendante, comportant les parties BP, CAP et CFP. On remarque par exemple que les lignes correspondant aux points d'accès $AP_1$ et $AP_3$ sont de même couleur : une transmission de signaux de contrôle peut intervenir simultanément sur la voie descendante sans risque d'interférence. En revanche, la ligne correspondant au point d'accès $AP_2$ possède une couleur distincte de celle des points d'accès $AP_1$ et $AP_3$. Ainsi, $AP_2$ ne peut transmettre en même temps que $AP_1$ et $AP_3$ sans risquer d'engendrer une interférence pour les terminaux situés dans la zone de couverture.

Des intervalles de transmission de signaux de contrôle sont ainsi alloués aux différents points d'accès au sein de la supertrame. Ainsi, par exemple, les points d'accès $AP_1$ et $AP_3$ peuvent émettre leurs messages de contrôle dans le premier intervalle $BP_1$ de $BP$, le point d'accès $AP_2$ peut émettre dans le second intervalle $BP_2$ de $BP$, les points d'accès $AP_4$ et $AP_6$ peuvent émettre dans l'intervalle $BP_3$ de $BP$, et enfin le point d'accès $AP_5$ peut émettre dans l'intervalle $BP_4$.

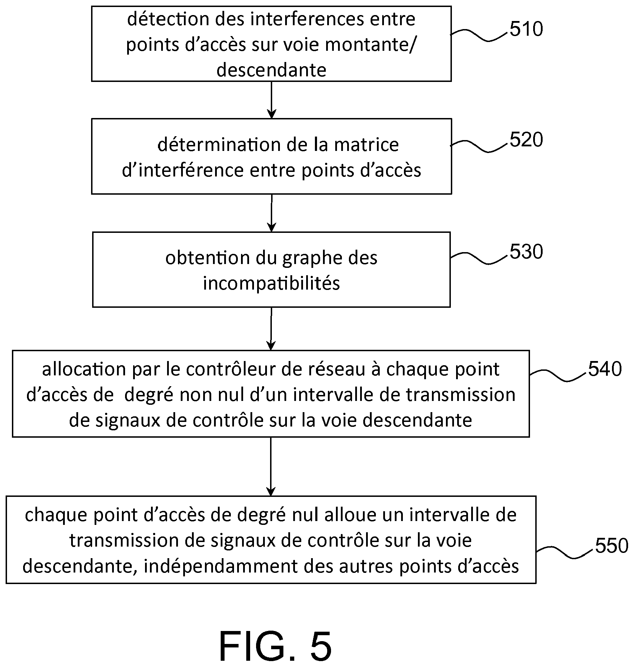

La Fig. 5 représente l'ordinogramme d'une allocation d'intervalles de transmission dans un système de télécommunication électronique sans fil, pouvant être mise en œuvre dans l'un quelconque des modes de réalisation de l'invention.

Cette première phase concerne l'allocation d'intervalles de transmission pendant la partie de contrôle (*BP*) de la supertrame.

A l'étape 510, on détecte les interférences entre points d'accès sur la voie descendante. Cette détection d'interférences est effectuée par le contrôleur de réseau à partir des rapports d'interférence (sur la voie descendante) renvoyés par les terminaux au contrôleur via les points d'accès. On détecte également les interférences entre points d'accès sur la voie montante. Cette détection d'interférence est effectuée par le contrôleur de réseau à partir des rapports d'interférence (sur la voie montante) renvoyés par ces points d'accès.

Cette étape peut avoir été réalisée lors du déploiement du réseau par exemple.

A l'étape 520, le contrôleur de réseau détermine une matrice d'interférence entre points d'accès à partir des interférences précédemment détectées. Une détection d'interférence entre points d'accès, sur la voie montante ou la voie descendante, correspond à une première valeur binaire dans la matrice et une absence d'interférence à une valeur binaire inverse.

A l'étape 530, le contrôleur de réseau construit un graphe des incompatibilités dont les sommets sont les points d'accès et dont la matrice d'adjacence est donnée par la matrice d'interférence.

A l'étape 540, le contrôleur de réseau alloue, aux points d'accès de degré non nul du graphe, des intervalles de transmission sur la voie descendante. Cette allocation est réalisée en colorant le graphe d'incompatibilités obtenu à l'étape précédente : deux points d'accès de couleurs distinctes se voient allouer des intervalles de transmission disjoints au sein de la partie de contrôle. Ainsi, deux points d'accès dont les zones de couverture se recouvrent se voient nécessairement allouer des intervalles de transmission disjoints et deux points d'accès dont les zones de couverture sont disjointes peuvent se voir allouer des intervalles de transmission identiques. La minimisation du nombre de couleurs dans le graphe se traduit par une minimisation du nombre d'intervalles de transmission distincts.

Lorsqu'un point d'accès correspond à un nœud de degré nul du graphe d'incompatibilités, celui-ci alloue en 550 des intervalles de transmission sur la voie descendante, indépendamment des autres points d'accès.

Un terminal souhaitant se connecter au réseau sélectionne le point d'accès pour lequel la moyenne de la qualité de la liaison descendante et celle de la liaison montante est la plus élevée. La qualité d'une liaison peut être par exemple estimée au moyen d'une métrique de rapport signal sur bruit. Il transmet ensuite au point d'accès sélectionné une requête d'association dans l'intervalle de réception réservé à ce point d'accès dans la partie de contrôle de la supertrame.

Le contrôleur de réseau peut allouer aux points d'accès des intervalles de transmission garantis (GTS) dans la partie CFP (*Contention-Free Period*) de la supertrame, sur la voie descendante. De manière similaire, le contrôleur de réseau peut allouer aux terminaux des intervalles de transmission garantis dans la partie CFP de la supertrame, sur la voie montante.

A cet égard, il convient de noter qu'un même intervalle de transmission garanti peut être alloué à la liaison descendante et à la liaison montante d'un point d'accès, la séparation des voies montante et descendante étant assurée par l'utilisation de gammes spectrales disjointes (par exemple visible sur la voie descendante et infrarouge sur la voie montante).

On détecte tout d'abord l'interférence sur la liaison descendante. Plus précisément, chaque terminal détermine dans quelle zone de couverture il se trouve. Cette information (par exemple la liste des identifiants des points d'accès détectés), dénommée information de couverture du terminal, est transmise sur la voie montante et fournie au contrôleur de réseau.

Si l'information de couverture du terminal ne comporte qu'un seul identifiant de point d'accès, on conclut à l'absence d'interférence sur la liaison descendante. Le point d'accès dernier peut alors allouer au terminal de manière autonome (c'est-à-dire sans en référer au contrôleur de réseau) un intervalle de transmission garanti sur la voie descendante. En d'autres termes, le point d'accès peut gérer de manière autonome l'allocation des intervalles de transmission GTS sur la voie descendante dans sa zone de couverture propre, c'est-à-dire non partagée avec la zone de couverture d'un point d'accès voisin. Toutefois, cette allocation autonome ne pourra se faire qu'au sein de la zone de la partie *CFP* non déjà allouée par le contrôleur de réseau, dénommée $CFP_{free}^{down}(AP_n)$, définie ci-après. Bien entendu, au sein de cette même zone, l'intervalle de transmission ne devra pas avoir été alloué par le point d'accès à une autre liaison descendante.

En revanche, si l'information de couverture comprend plusieurs identifiants de points d'accès, autrement dit si le terminal se trouve dans une zone d'interférence entre liaisons descendantes, l'allocation d'intervalle de transmission garanti est effectuée par le contrôleur de réseau.

Celui-ci gère pour chaque point d'accès AP la zone $CFP_{free}^{down}(AP_n)$ de la partie *CFP*.

Avant toute allocation, autrement dit avant tout établissement d'une liaison descendante, chaque point d'accès jouit d'une plage temporelle disponible égale à la totalité de la partie CFP de la supertrame,

$$CFP_{free}^{down}(AP_n) = CFP .$$

Lorsque le contrôleur de réseau alloue au terminal un intervalle de transmission garanti (GTS) sur la voie descendante, il ne peut le faire qu'en réduisant la plage temporelle disponible $CFP_{free}^{down}(AP_n)$ relative au point d'accès. Lorsque cette allocation est effectuée, le contrôleur de réseau supprime l'intervalle de transmission ainsi alloué des plages temporelles disponibles (voie descendante) $CFP_{free}^{down}(AP_m)$ des points d'accès $AP_m$ figurant dans l'information de couverture du terminal.

En pratique, le contrôleur de réseau dispose d'une première zone mémoire représentant la plage temporelle disponible (voie descendante) pour chaque point d'accès. Cette zone mémoire est divisée en autant de sections que d'intervalles de transmission dans la zone CFP. Lorsqu'un intervalle de transmission est alloué à un point d'accès pour une liaison descendante vers un terminal, l'identifiant du point d'accès est stocké dans les sections correspondantes des premières zones mémoires des points d'accès figurant dans l'information de couverture du terminal. Réciproquement, lorsque la liaison descendante entre le point d'accès et le terminal est rompue, l'identifiant du point d'accès est effacé des sections correspondantes en question et les plages temporelles sont augmentées de l'intervalle de transmission précédemment alloué. Ainsi, lorsqu'une section de la première zone mémoire d'un point d'accès $AP_n$ ne contient aucun identifiant de point d'accès, on peut en conclure qu'elle fait partie de la plage temporelle disponible $CFP_{free}^{down}(AP_n)$.

De manière similaire, on détecte l'interférence sur la liaison montante. Plus précisément, chaque point d'accès détermine une liste des identifiants des terminaux qu'il reçoit sur la liaison montante, dénommée ci-après information de réception.

Lorsque l'identifiant du terminal $D$ n'apparait que dans l'information de réception du point accès qui lui est associé, l'allocation de l'intervalle de transmission garanti peut être effectuée de manière autonome par ce dernier.

A défaut, la liaison montante est interférée et le contrôleur de réseau est chargé de l'allocation. Lorsque le contrôleur de réseau alloue à la liaison montante entre un terminal $D$ et le point d'accès $AP_n$ auquel il est associé un intervalle de transmission garanti (GTS), il ne peut le faire que dans la plage temporelle disponible (voie montante), $CFP_{free}^{up}(AP_n)$, relative au point d'accès $AP_n$ en question. Lorsque cette allocation est effectuée, le contrôleur de réseau supprime l'intervalle de transmission ainsi alloué des plages temporelles disponibles (voie montante), $CFP_{free}^{up}(AP_m)$, relatives aux points d'accès $AP_m$ dont l'information d'association comprend l'identifiant du terminal $D$.

En pratique, comme pour la voie descendante, le contrôleur de réseau dispose d'une seconde zone mémoire représentant la plage temporelle disponible (voie montante) pour chaque point d'accès. Cette zone mémoire est divisée en autant de sections que d'intervalles de transmission dans la zone CFP, chaque section contenant l'identifiant du terminal à qui est alloué l'intervalle de transmission correspondant.

Lorsqu'un intervalle de transmission est alloué à une liaison montante, l'identifiant du terminal est stocké dans les sections correspondantes des secondes zones mémoires des points d'accès dont l'information de réception contient l'identifiant du terminal. Réciproquement, lorsque la liaison montante entre le terminal et le point d'accès est rompue, l'identifiant du terminal est effacé des sections correspondantes en question. Ainsi, lorsqu'une section de la seconde zone mémoire d'un point d'accès $AP_n$ ne contient aucun identifiant de terminal, on peut en conclure qu'elle fait partie de la plage temporelle disponible (voie montante), $CFP_{free}^{up}(AP_n)$ de ce dernier.

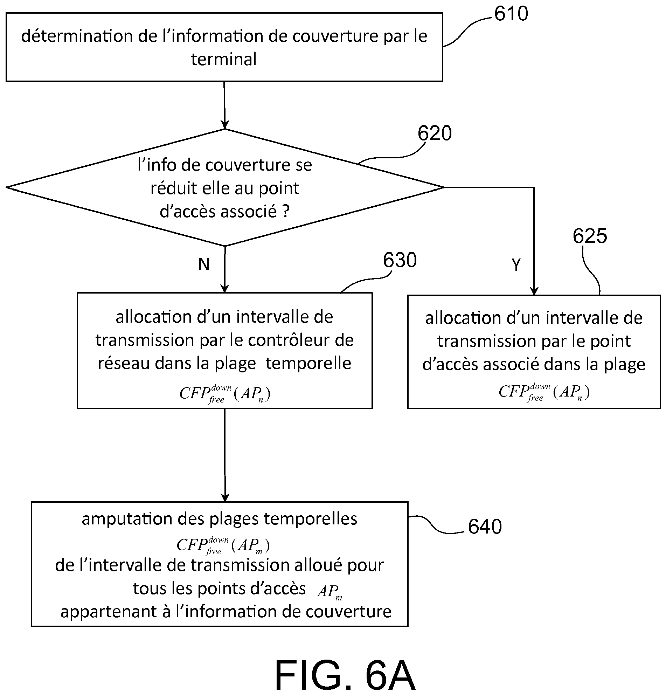

La Fig. 6A représente l'ordinogramme d'une méthode d'allocation d'intervalles de transmission pour les liaisons descendantes dans un système de télécommunication électronique sans fil, selon le premier mode de réalisation de l'invention.

On considère une liaison descendante entre un point d'accès $AP_n$ et un terminal $D$.

A l'étape 610, le terminal $D$ détermine son information de couverture (liste des identifiants des points d'accès détectés) et la transmet au contrôleur de réseau.

A l'étape 620, on détermine si l'information de couverture se réduit au point d'accès $AP_n$ qui lui est associé.

Dans l'affirmative, en 625, le point d'accès $AP_n$ alloue à la liaison descendante un intervalle de transmission dans la plage temporelle $CFP_{free}^{down}(AP_n)$.

Dans la négative, l'allocation est effectuée par le contrôleur de réseau. A l'étape 630, le contrôleur de réseau alloue un intervalle de transmission à la liaison descendante dans la plage temporelle $CFP_{free}^{down}(AP_n)$.

A l'étape 640, le contrôleur de réseau ampute de l'intervalle de transmission alloué les plages temporelles $CFP_{free}^{down}(AP_m)$ relatives aux nœuds d'accès $AP_m$ présents dans l'information de couverture du terminal et donc en particulier la plage temporelle $CFP_{free}^{down}(AP_n)$ relative au point d'accès associé.

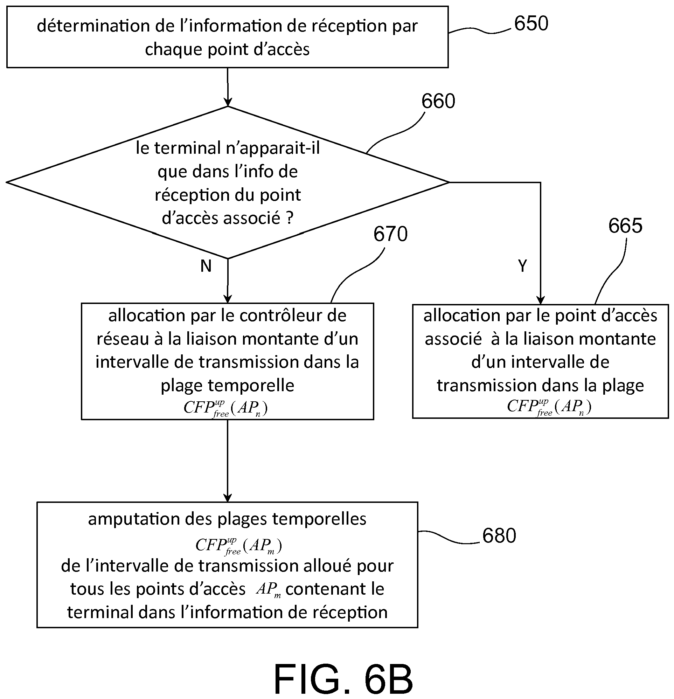

La Fig. 6B représente l'ordinogramme d'une méthode d'allocation d'intervalles de transmission pour les liaisons montantes dans un système de télécommunication électronique sans fil, selon le premier mode de réalisation de l'invention.

On considère une liaison montante entre un terminal $D$ et un point d'accès $AP_n$.

A l'étape 650, chaque point d'accès détermine son information de réception (liste des identifiants des terminaux détectés) et la transmet au contrôleur de réseau.

A l'étape 660, on détermine si l'identifiant du terminal $D$ n'apparait que dans l'information de réception du point d'accès qui lui est associé, $AP_n$.

Dans l'affirmative, en 665, le point d'accès $AP_n$ alloue à la liaison montante un intervalle de transmission dans la plage temporelle $CFP_{free}^{up}(AP_n)$.

Dans la négative, l'allocation est effectuée par le contrôleur de réseau. A l'étape 670, le contrôleur de réseau alloue un intervalle de transmission à la liaison montante dans la plage temporelle $CFP_{free}^{up}(AP_n)$.

A l'étape 680, le contrôleur de réseau ampute de l'intervalle de transmission alloué les plages temporelles $CFP_{free}^{up}(AP_m)$ relatives aux nœuds d'accès $AP_m$ dont l'information de réception contient l'identifiant du terminal $D$, donc en particulier la plage temporelle $CFP_{free}^{up}(AP_n)$ relative au point d'accès $AP_n$ qui lui est associé.

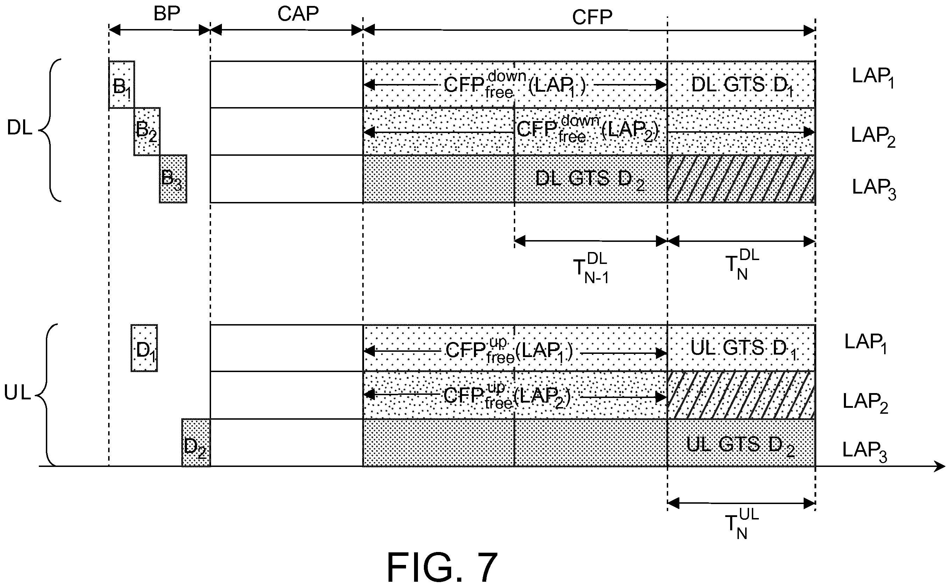

La Fig. 7 représente une application de la méthode d'allocation d'intervalles de transmission, selon le premier mode de réalisation de l'invention, au système de télécommunication optique sans fil des Figs 1A et 1B.

On a représenté ici l'allocation des intervalles de transmission dans une supertrame, en indiquant les parties BP, CAP et CFP de cette dernière.

On a également distingué dans la partie supérieure de la figure l'allocation des intervalles de transmission sur la voie descendante (DL) et dans la partie inférieure l'allocation des intervalles de transmission sur la voie montante (UL).

En ce qui concerne la partie contrôle (BP) de la supertrame, on remarque que chaque point d'accès dispose d'un intervalle de transmission de signaux de contrôle ($B_1$, $B_2$, $B_3$) sur la voie descendante ce qui est cohérent avec le diagramme d'interférence de la Fig. 1A, chaque zone de couverture intersectant les deux autres. De même, sur la voie montante, un intervalle de transmission de signaux de contrôle est alloué à chaque terminal ($D_1$, $D_2$). On remarque qu'aucun intervalle de transmission de signaux de contrôle n'est attribué en relation avec le point d'accès $LAP_2$ dans la mesure où aucune liaison montante n'est établie avec ce dernier.

En ce qui concerne la partie $CFP$ de la supertrame, on remarque que pour la voie descendante, le point d'accès $LAP_1$ jouit de la totalité de sa plage temporelle disponible hormis l'intervalle de transmission de données (voie descendante), $T_N^{DL}$, qui lui a été alloué par le contrôleur de réseau pour communiquer avec $D_1$. Autrement dit, $CFP_{free}^{down}(LAP_1) = CFP \setminus T_N^{DL}$.

Cet intervalle de transmission a été corrélativement supprimé des plages temporelles disponibles (voie descendante) relatives aux points d'accès figurant dans l'information de couverture du terminal $D_1$, à savoir $\{LAP_1, LAP_3\}$. Le point d'accès $LAP_2$ jouit de la totalité de sa plage temporelle disponible dans la mesure où il n'apparait ni dans l'information de couverture du terminal $D_1$ ni dans celle du terminal $D_2$, c'est-à-dire $CFP_{free}^{down}(LAP_2) = CFP$. La plage temporelle disponible du point d'accès $LAP_3$ est amputée de $T_N^{DL}$ comme indiqué précédemment, autrement dit $CFP_{free}^{down}(LAP_3) = CFP \setminus T_N^{DL}$. L'allocation de l'intervalle de transmission $T_{N-1}^{DL}$ est effectuée par $LAP_3$ au sein de la plage temporelle disponible $CFP_{free}^{down}(LAP_3)$ pour communiquer avec $D_2$. L'information de couverture du terminal $D_2$ étant limitée à $\{LAP_3\}$, il n'y a pas lieu de supprimer cet intervalle de transmission des plages temporelles disponibles de $LAP_1$ et $LAP_2$.

Sur la voie montante, le contrôleur de réseau alloue l'intervalle de transmission de données $T_N^{UL}$ au terminal $D_1$ pour communiquer avec $LAP_1$. Etant donné que l'information de réception de $LAP_2$, à savoir $\{D_1, D_2\}$, comprend l'identifiant du terminal $D_1$, cet intervalle de transmission est supprimé de la plage temporelle disponible (voie montante) de $LAP_2$, autrement dit $CFP_{free}^{up}(LAP_2) = CFP \setminus T_N^{UL}$. En revanche, l'information de réception de $LAP_3$, à savoir $\{D_2\}$ ne comprenant pas l'identifiant du terminal $D_1$, l'intervalle de trans-

mission $T_N^{UL}$ n'est pas supprimé de la plage temporelle disponible (voie montante) de $LAP_3$.

De même, le contrôleur de réseau alloue l'intervalle de transmission $T_N^{UL}$ au terminal $D_2$ pour la liaison montante avec $LAP_3$. Etant donné que l'information de réception de $LAP_2$, à savoir $\{D_1,D_2\}$ comprend l'identifiant du terminal $D_2$, cet intervalle de transmission doit être corrélativement supprimé de la plage temporelle disponible (voie montante) de $LAP_2$, $CFP_{free}^{up}(LAP_2) = CFP \setminus T_N^{UL}$. On notera que la section correspondant à $T_N^{UL}$ de la seconde zone mémoire du point d'accès $LAP_2$ contient les identifiants de $D_1$, $D_2$. La rupture de l'une des liaisons montantes $D_1$ - $LAP_1$, $D_2$ - $LAP_3$ ne libère pas pour autant l'intervalle de transmission $T_N^{UL}$ dans la mesure où l'identifiant du terminal dont la liaison n'est pas rompue reste stocké dans la section en question.

Dans un deuxième mode de réalisation, on suppose que l'association d'un point d'accès au terminal est réalisée seulement sur la qualité de la liaison montante.

Dans ce cas, l'information de réception comprend, outre les identifiants des terminaux, des indicateurs de qualité de liaison tels que mesurés par le point d'accès. Le point d'accès offrant la meilleure qualité de liaison montante est choisi pour être associé au terminal.

A l'étape 610, le terminal détecte non seulement les identifiants des points d'accès mais mesure également la qualité des signaux reçus (rapports signal/ bruit) de ces points d'accès. En d'autres termes, l'information de couverture transmise par un terminal au contrôleur de réseau contient non seulement la liste des points d'accès en visibilité du terminal mais aussi des indicateurs de la qualité des liaisons descendantes qui pourraient être établies avec ces points d'accès.

On détermine ensuite, parmi les points d'accès figurant dans l'information de couverture, celui présentant le meilleur indicateur de qualité de liaison descendante. Dans le cas où le point d'accès sélectionné pour l'établissement de la liaison descendante est identique à celui sélectionné pour l'établissement de la voie montante, on retrouve la situation décrite en relation avec la Fig. 6A. En revanche, lorsque celui-ci est différent, la liaison descendante est établie au moyen d'une première liaison, via le réseau Ethernet, entre le point d'accès associé et le point d'accès présentant le meilleur indicateur de qualité de liaison descendante, dit point d'accès auxiliaire, et d'une seconde liaison, entre ce point d'accès auxiliaire et le terminal. On bénéficie dans ce cas à la fois d'une qualité de liaison optimale tant sur la liaison montante que sur la liaison descendante. On comprend ainsi qu'il y a dissociation entre le point d'accès associé au terminal (et communiquant avec lui dans la période de contrôle $BP$) et le point d'accès de la liaison descendante, à laquelle est alloué l'intervalle de transmission.

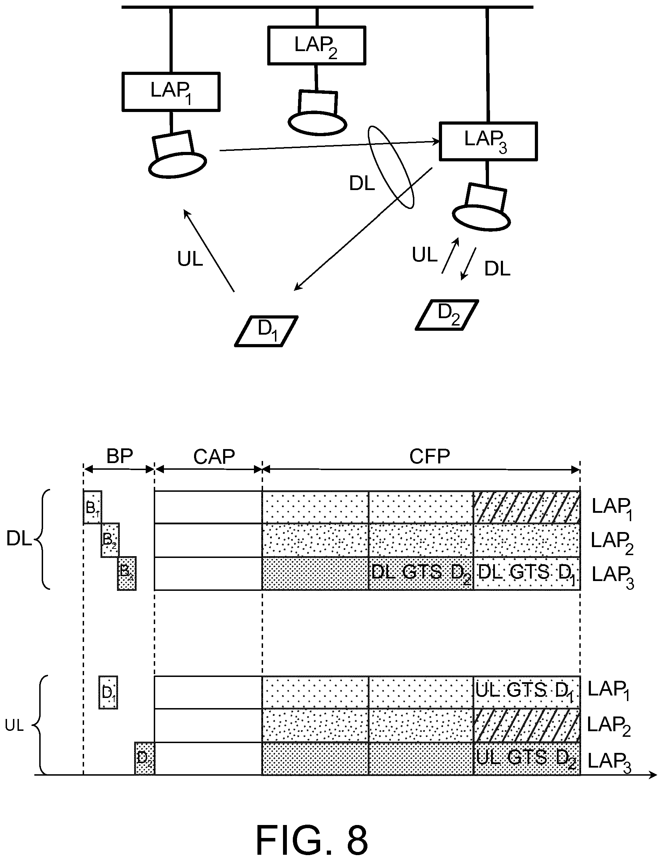

On a représenté en Fig. 8 une application de la méthode d'allocation d'intervalles de transmission, selon ce deuxième mode de réalisation, au système de télécommunication optique sans fil des Figs. 1A et 1B.

Sur la partie supérieure de la figure, on a indiqué schématiquement les liaisons montante et descendante entre le terminal $D_1$ et le point d'accès $LAP_1$. La liaison montante entre $D_1$ et $LAP_1$ est celle qui présente la meilleure qualité de liaison. En revanche, sur la voie descendante, la liaison entre $LAP_3$ et $D_1$ est ici de meilleure qualité que celle entre $LAP_1$ et $D_1$. Ainsi la liaison descendante retenue est composée d'une première liaison via le réseau filaire (Ethernet) entre $LAP_1$ et $LAP_3$ et d'une seconde liaison (optique sans fil) entre $LAP_3$ et $D_1$.

Dans la partie inférieure de la figure, on a représenté l'allocation des intervalles de transmission. On remarque que cette allocation est inchangée sur la voie montante par rapport à celle de la Fig. 7. En revanche, sur la voie descendante, un intervalle de transmission de données est alloué à la liaison entre $LAP_3$ et $D_1$ au lieu d'être alloué à une liaison entre $LAP_1$ et $D_1$. Le flux de données est toujours transmis par $LAP_1$ mais relayé à $LAP_3$ via le réseau qui le transmet à $D_1$.

Dans un troisième mode de réalisation, on suppose que l'association d'un point d'accès au terminal est réalisée seulement sur la qualité de la liaison descendante. Dans ce cas, l'information de couverture comprend, outre les identifiants des points d'accès, des indicateurs de qualité de liaison tels que mesurés par le terminal. Le point d'accès offrant la meilleure qualité de liaison descendante est choisi pour être associé au terminal.

Dans ce cas, à l'étape 650, les points d'accès détectent non seulement les identifiants des terminaux mais mesurent également la qualité des signaux reçus (rapports signal/ bruit) de ces terminaux. En d'autres termes, l'information de réception transmise par un point d'accès au contrôleur de réseau contient non seulement la liste des terminaux en visibilité du point d'accès mais aussi des indicateurs de la qualité des liaisons montantes qui pourraient être établies avec ces points d'accès.

On détermine ensuite, parmi les points d'accès comprenant l'identifiant du terminal dans leur information de réception, celui présentant le meilleur indicateur de qualité de liaison montante. Dans le cas où le point d'accès sélectionné pour l'établissement de la liaison montante est identique à celui sélectionné pour l'établissement de la voie descendante, on retrouve la situation décrite en relation avec la Fig. 7. En revanche, lorsque celui-ci est différent, la liaison montante est établie au moyen d'une première liaison entre le terminal et le point d'accès présentant le meilleur indicateur de qualité de liaison montante, dit point d'accès auxiliaire, et d'une seconde liaison, via le réseau Ethernet, entre ce point d'accès auxiliaire et le point d'accès associé. On bénéficie dans ce cas à la fois d'une qualité de liaison optimale tant sur la liaison descendante que sur la liaison montante. On comprend ainsi qu'il y a dissociation entre le point d'accès associé au terminal (et communiquant avec lui dans la période de contrôle *BP*) et le point d'accès de la liaison montante, c'est-à-dire auquel est alloué l'intervalle de transmission et par lequel transitent les données.

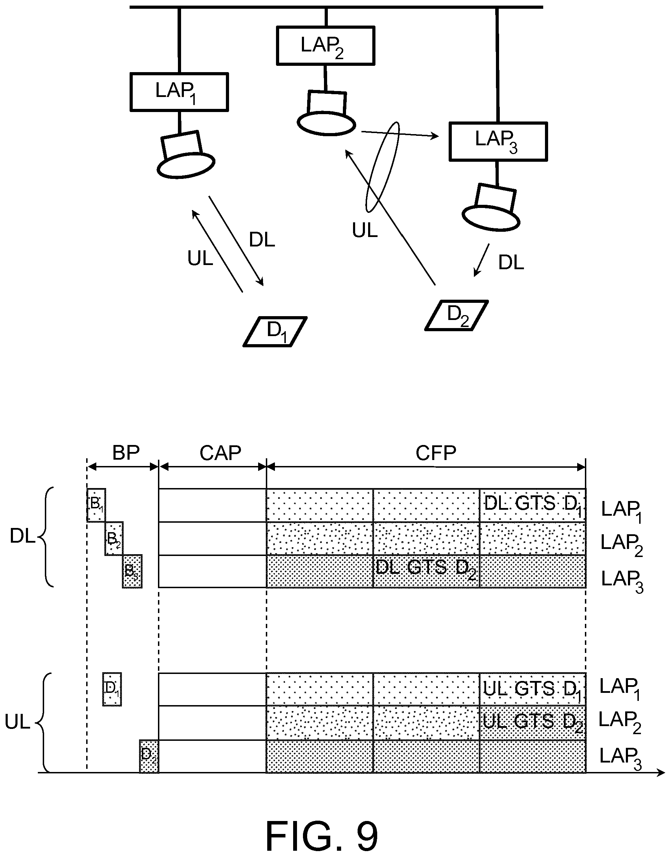

On a représenté en Fig. 9 une application de la méthode d'allocation d'intervalles de transmission, selon le deuxième mode de réalisation, au système de télécommunication optique sans fil des Figs 1A et 1B.

Sur la partie supérieure de la figure on a indiqué schématiquement les liaisons montante et descendante entre le terminal $D_2$ et le point d'accès $LAP_3$. La liaison descendante entre $LAP_3$ et $D_2$ est celle qui présente la meilleure qualité de liaison. En revanche, sur la voie montante, la liaison entre $D_2$ et $LAP_2$ est ici de meilleure qualité que celle entre $D_2$ et $LAP_3$. Ainsi, la liaison montante retenue est composée d'une première liaison (optique sans fil) entre $D_2$ et $LAP_2$ et d'une seconde liaison via le réseau filaire (Ethernet) entre $LAP_2$ et $LAP_3$.

Dans la partie inférieure de la figure, on a représenté l'allocation des intervalles de transmission. On remarque que cette allocation est inchangée sur la voie descendante par rapport à celle de la Fig. 7. En revanche, sur la voie montante, un intervalle de transmission de données est alloué à la liaison entre $D_2$ et $LAP_2$ au lieu d'être alloué à une liaison entre $D_2$ et $LAP_3$. Le flux de données transmis à $LAP_2$ est ensuite relayé par ce dernier à $LAP_3$ via le réseau Ethernet.

Selon un quatrième mode de réalisation, le point d'accès associé au terminal est choisi sur la base d'une moyenne de la qualité de la liaison montante et de la qualité de la liaison descendante, la qualité d'une liaison étant estimée par exemple sur la base d'une métrique de rapport signal sur bruit ou de taux d'erreur. Dans ce cas, le point d'accès correspondant à la meilleure qualité de liaison descendante et le point d'accès correspondant à la meilleure qualité de liaison montante peuvent tous deux différer du point d'accès associé au terminal. L'allocation d'un intervalle de transmission est alors effectuée pour un premier point d'accès auxiliaire sur la voie descendante, conformément au deuxième mode de réalisation, et pour un second point d'accès auxiliaire sur la voie montante, conformément au troisième mode de réalisation. En définitive, le point d'accès associé n'est alors utilisé que pour les signaux et les messages de contrôle.

**Revendications**

1. Méthode d'allocation d'intervalles de transmission dans un système optique sans fil comprenant une pluralité de points d'accès reliés à un réseau filaire et contrôlés par un contrôleur de réseau, et une pluralité de terminaux, **caractérisée en ce que** :

   - à chaque terminal est associé un point d'accès parmi ladite pluralité de points d'accès, tel que la moyenne des qualités des liaisons montante et descendante entre ce point d'accès et ledit terminal soit maximale ;
   - chaque terminal associé à un point d'accès détermine (610) une information de couverture contenant les identifiants des points d'accès reçus par le terminal ;
   - lorsque l'information de couverture d'un terminal est réduite à l'identifiant du point d'accès associé au terminal, le point d'accès alloue (625) à la liaison descendante, un intervalle de transmission dans une plage temporelle disponible gérée par le contrôleur de réseau $\left( CFP_{free}^{down}(AP_n) \right)$ ;
   - lorsque l'information de couverture d'un terminal comprend une pluralité d'identifiants de points d'accès, le contrôleur de réseau alloue (630) à la liaison descendante entre le terminal et son point d'accès associé un intervalle de transmission dans une plage temporelle disponible $\left( CFP_{free}^{down}(AP_n) \right)$ et ampute (640) corrélativement les plages temporelles disponibles des points d'accès appartenant à l'information de couverture de l'intervalle de transmission ainsi alloué.

2. Méthode d'allocation d'intervalles de transmission selon la revendication 1, **caractérisée en ce que** :

   - chaque point d'accès détermine (650) une information de réception contenant les identifiants des terminaux reçus par le point d'accès ;
   - lorsque l'identifiant d'un terminal n'apparait que dans l'information de réception du point d'accès qui lui est associé, ce dernier alloue (660) à la liaison montante un intervalle de transmission dans une plage temporelle disponible gérée par le contrôleur de réseau $\left( CFP_{free}^{up}(AP_n) \right)$ ;
   - lorsque l'identifiant du terminal apparait dans une pluralité d'informations de réception, le contrôleur de réseau alloue (670) à la liaison montante entre le terminal et son point d'accès associé un intervalle de transmission dans une plage temporelle disponible $\left( CFP_{free}^{up}(AP_n) \right)$ et ampute (680) corrélativement les plages temporelles disponibles de l'intervalle de transmission ainsi alloué pour tous les points d'accès contenant l'identifiant du terminal dans leur information de réception.

3. Méthode d'allocation d'intervalles de transmission dans un système optique sans fil, comprenant une pluralité de points d'accès reliés à un réseau filaire et contrôlés par un contrôleur de réseau, et une pluralité de terminaux, **caractérisée en ce que** :

- à chaque terminal est associé un point d'accès parmi ladite pluralité de points d'accès, tel que la qualité de la liaison montante ledit terminal et ce point d'accès soit maximale ;

- chaque terminal associé à un point d'accès détermine (610) une information de couverture contenant les identifiants des points d'accès reçus par le terminal ainsi que des indicateurs de qualité de liaison descendante avec ces points d'accès, ladite information de couverture étant remontée au contrôleur de réseau via les points d'accès ;

- lorsque l'information de couverture d'un terminal est réduite à l'identifiant du point d'accès associé au terminal, le point d'accès alloue (625) à la liaison descendante un intervalle de transmission dans une plage temporelle disponible gérée par le contrôleur de réseau

$$\left( CFP_{free}^{down}(AP_n) \right);$$

- lorsque l'information de couverture comprend une pluralité d'identifiants de points d'accès, le contrôleur de réseau détermine parmi ladite pluralité un point d'accès auxiliaire tel que la qualité de la liaison descendante entre le point d'accès auxiliaire et le terminal soit maximale, la liaison descendante entre le point d'accès associé et le terminal comprenant une première liaison à travers le réseau filaire entre le point d'accès associé et le point d'accès auxiliaire et une seconde liaison descendante entre le point d'accès auxiliaire et le terminal ;

- le contrôleur de réseau alloue à la seconde liaison descendante entre le point d'accès auxiliaire et le terminal un intervalle de transmission dans une plage temporelle disponible $\left( CFP_{free}^{down}(AP_n) \right)$ et ampute corrélativement les plages temporelles disponibles des points d'accès appartenant à l'information de couverture de l'intervalle de transmission ainsi alloué.

4. Méthode d'allocation d'intervalles de transmission dans un système optique sans fil comprenant une pluralité de points d'accès reliés à un réseau filaire et contrôlés par un contrôleur de réseau, et une pluralité de terminaux, **caractérisée en ce que** :

- à chaque terminal est associé un point d'accès parmi ladite pluralité de points d'accès, tel que la qualité de la liaison descendante entre ce point d'accès et ledit terminal soit maximale ;

- chaque point d'accès détermine (650) une information de réception contenant les identifiants des terminaux reçus par le point d'accès ainsi que des indicateurs de qualité de liaison montante avec ces terminaux, ladite information de réception étant transmise au contrôleur de réseau ;

- lorsque l'identifiant d'un terminal n'apparait que dans l'information de réception du point d'accès qui lui est associé, ce dernier alloue (665) à la liaison montante un intervalle de transmission dans une plage temporelle disponible gérée par le contrôleur de réseau

$$\left( CFP_{free}^{up}(AP_n) \right);$$

- lorsque l'identifiant d'un terminal apparait dans une pluralité d'informations de réception de points d'accès, le contrôleur de réseau détermine parmi ladite pluralité un point d'accès auxiliaire tel que la qualité de la liaison montante entre le terminal et ce point d'accès auxiliaire soit maximale, la liaison montante entre le terminal le point d'accès associé comprenant une première liaison montante entre le terminal et le point d'accès auxiliaire et une seconde liaison dans le réseau filaire entre le point d'accès auxiliaire et le point d'accès associé.

5. Méthode d'allocation d'intervalles de transmission dans un système optique sans fil selon l'une des revendications précédentes, **caractérisée en ce que** ledit système optique est conforme au standard IEEE 802.15.7.

**Patentansprüche**

1. Verfahren zum Zuweisen von Übertragungsintervallen in einem drahtlosen optischen System, enthaltend eine Vielzahl von Zugangspunkten, die mit einem drahtgebundenen Netzwerk verbunden sind und über eine Netzwerksteuerung gesteuert werden, sowie eine Vielzahl von Endgeräten, **dadurch gekennzeichnet, dass**:

- jedem Endgerät ein Zugangspunkt aus der Vielzahl von Zugangspunkten zugeordnet wird, so dass der Durchschnitt der Qualitäten der Uplink- und Downlink-Verbindungen zwischen diesem Zugangspunkt und dem Endgerät maximal ist;
- jedes Endgerät, das einem Zugangspunkt zugeordnet ist, Abdeckungsinformation bestimmt (610), die die vom Endgerät empfangenen Zugangspunkt-Kennungen enthält;
- dann, wenn die Abdeckungsinformation eines Endgeräts auf die Kennung des dem Endgerät zugeordneten Zugangspunkts reduziert ist, der Zugangspunkt der Downlink-Verbindung ein Übertragungsintervall innerhalb eines verfügbaren Zeitbereichs zuweist (625), das von der Netzwerksteuerung verwaltet wird

$$(CFP_{free}^{down}(APn)),$$

- dann, wenn die Abdeckungsinformation eines Endgeräts eine Vielzahl von Zugangspunkt-Kennungen enthält, die Netzwerksteuerung der Downlink-Verbindung zwischen dem Endgerät und seinem zugeordneten Zugangspunkt ein Übertragungsintervall in einem verfügbaren Zeitbereich $(CFP_{free}^{down}(APn))$ zuweist (630) und die verfügbaren Zeitbereiche der Zugangspunkte, die zu der Abdeckungsinformation gehören, entsprechend um das so zugewiesene Übertragungsintervall kürzt (640).

2. Verfahren zum Zuweisen von Übertragungsintervallen nach Anspruch 1, **dadurch gekennzeichnet, dass**:

- jeder Zugangspunkt eine Empfangsinformation bestimmt (650), welche die von dem Zugangspunkt empfangenen Kennungen der Endgeräte enthält;
- dann, wenn die Kennung eines Endgeräts nur in der Empfangsinformation von dem diesen zugeordneten Zugangspunkt erscheint, letzterer der Uplink-Verbindung ein Übertragungsintervall in einem verfügbaren Zeitbereich $(CFP_{free}^{up}(APn))$ zuweist (660), der von der Netzwerksteuerung verwaltet wird;
- dann, wenn die Kennung eines Endgeräts in einer Vielzahl von Empfangsinformationen erscheint, die Netzwerksteuerung (670) der Uplink-Verbindung zwischen dem Endgerät und seinem zugeordneten Zugangspunkt ein Übertragungsintervall in einem verfügbaren Zeitbereich $(CFP_{free}^{up}(APn))$ zuweist und die verfügbaren Zeitbereiche um das so zugewiesene Übertragungsintervall für alle Zugangspunkte kürzt (680), die die Kennung des Endgeräts in ihrer Empfangsinformationen enthalten.

3. Verfahren zum Zuweisen von Übertragungsintervallen in einem drahtlosen optischen System, enthaltend eine Vielzahl von Zugangspunkten, die mit einem drahtgebundenen Netzwerk verbunden sind und über eine Netzwerksteuerung gesteuert werden, sowie eine Vielzahl von Endgeräten, **dadurch gekennzeichnet, dass**:

- jedem Endgerät ein Zugangspunkt aus der Vielzahl von Zugangspunkten zugeordnet wird, so dass die Qualität der Uplink-Verbindung zwischen dem Endgerät und diesem Zugangspunkt maximal ist;
- jedes Endgerät, das einem Zugangspunkt zugeordnet ist, eine Abdeckungsinformation bestimmt (610), die die vom Endgerät empfangenen Zugangspunkt-Kennungen sowie Indikatoren für die Qualität der Downlink-Verbindung mit diesen Zugangspunkten enthält, wobei die Abdeckungsinformation über die Zugangspunkte an die Netzwerksteuerung weitergeleitet wird;
- dann, wenn die Abdeckungsinformation eines Endgeräts auf die Kennung des dem Endgerät zugeordneten Zugangspunkts reduziert ist, der Zugangspunkt der Downlink-Verbindung ein Übertragungsintervall in einem verfügbaren Zeitbereich zuweist (625), das von der Netzwerksteuerung verwaltet wird $(CFP_{free}^{down}(APn)),$

- dann, wenn die Abdeckungsinformation eine Vielzahl von Zugangspunkt-Kennungen enthält, die Netzwerksteuerung aus der Vielzahl einen Hilfszugangspunkt bestimmt, so dass die Qualität der Downlink-Verbindung zwischen dem Hilfszugangspunkt und dem Endgerät maximal ist, wobei die Downlink-Verbindung zwischen dem zugeordneten Zugangspunkt und dem Endgerät eine erste Verbindung durch das drahtgebundene Netzwerk zwischen dem zugeordneten Zugangspunkt und dem Hilfszugangspunkt und eine zweite Downlink-Verbindung zwischen dem Hilfszugangspunkt und dem Endgerät enthält;
- die Netzwerksteuerung der zweiten Downlink-Verbindung zwischen dem Hilfszugangspunkt und dem Endgerät ein Übertragungsintervall in einem verfügbaren Zeitbereich $(CFP_{free}^{down}(APn))$ zuweist und die verfügbaren Zeitbereiche der Zugangspunkte, die zu der Abdeckungsinformation gehören, entsprechend um das zugewiesene Übertragungsintervall kürzt.

4. Verfahren zum Zuweisen von Übertragungsintervallen in einem drahtlosen optischen System, enthaltend eine Vielzahl von Zugangspunkten, die mit einem drahtgebundenen Netzwerk verbunden sind und über eine Netzwerksteuerung gesteuert werden, sowie eine Vielzahl von Endgeräten, **dadurch gekennzeichnet, dass**:

- jedem Endgerät ein Zugangspunkt aus der Vielzahl von Zugangspunkten zugeordnet wird, so dass die Qualität der Downlink-Verbindung zwischen diesem Zugangspunkt und dem Endgerät maximal ist;
- jeder Zugangspunkt eine Empfangsinformation bestimmt (650), die die vom Zugangspunkt empfangenen Kennungen der Endgeräte sowie Indikatoren für die Qualität der Uplink-Verbindung mit diesen Endgeräten enthält, wobei die Empfangsinformation an die Netzwerksteuerung übertragen wird;

- dann, wenn der Kennung eines Endgeräts nur in der Empfangsinformation von dem diesen zugeordneten Zugangspunkt erscheint, letzterer der Uplink-Verbindung ein Übertragungsintervall in einem verfügbaren Zeitbereich $(CFP_{free}^{up}(APn))$ zuweist (665), der von der Netzwerksteuerung verwaltet wird;

- dann, wenn die Kennung eines Endgeräts in einer Vielzahl von Empfangsinformationen von Zugangspunkten erscheint, die Netzwerksteuerung aus der Vielzahl einen Hilfszugangspunkt bestimmt, so dass die Qualität der Uplink-Verbindung zwischen dem Endgerät und diesem Hilfszugangspunkt maximal ist, wobei die Uplink-Verbindung zwischen dem Endgerät und dem zugeordneten Zugangspunkt eine erste Uplink-Verbindung zwischen dem Endgerät und dem Hilfszugangspunkt und eine zweite Verbindung in dem drahtgebundenen Netzwerk zwischen dem Hilfszugangspunkt und dem zugeordneten Zugangspunkt enthält.

5. Verfahren zum Zuweisen von Übertragungsintervallen in einem drahtlosen optischen System nach einem der vorangehenden Ansprüche, **dadurch gekennzeichnet, dass** das optische System konform ist mit der Norm IEEE 802.15.7.


**Claims**

1. Method of allocating transmission time slots in an optical wireless system comprising a plurality of access points connected to a wired network and controlled by a network controller, and a plurality of terminals, **characterised in that**:

   - one access point among said plurality of access points is associated with each terminal, such that the average quality of the uplink and the downlink between this access point and said terminal is maximum;
   - each terminal associated with an access point determines (610) coverage information containing the identifiers of access points received by the terminal;
   - when the coverage information of a terminal is reduced to the identifier of the access point associated with the terminal, the access point allocates (625) a transmission time slot to the downlink, within an available time range managed by the network controller $(CFP_{free}^{down}(AP_n))$;

- when the coverage information of a terminal includes a plurality of access point identifiers, the network controller allocates (630) a transmission time slot to the downlink between the terminal and its associated access point, within an available time range ( $CFP_{free}^{down}(AP_n)$ ) and correspondingly eliminates (640) the transmission time slot thus allocated from the available time ranges of access points belonging to the coverage information.

2. Method of allocating transmission time slots according to claim 1 or 2, **characterised in that**:

   - each access point determines (650) reception information containing terminal identifiers received by the access point;
   - when the identifier of a terminal only appears in the reception information of the access point associated with it, this access point allocates (660) a time slot to the uplink, within an available time range managed by the network controller $(CFP_{free}^{up}(AP_n))$;
   - when the terminal identifier appears in a plurality of items of reception information, the network controller allocates (670) a transmission time slot to the uplink between the terminal and its associated access point, within an available time range ( $CFP_{free}^{up}(AP_n)$ ) and at the same time eliminates (680) the transmission time slot thus allocated from available time ranges for all access points containing the terminal identifier in their reception information.

3. Method of allocating transmission time slots in an optical wireless system comprising a plurality of access points connected to a wired network and controlled by a network controller, and a plurality of terminals, **characterised in that**:

   - one access point among said plurality of access points is associated with each terminal, such that the quality of the uplink between said terminal and this access point is maximum;
   - each terminal associated with an access point determines (610) coverage information containing access point identifiers received by the terminal and quality indicators of the downlink with these access points, said coverage information being forwarded to the network controller through the access points;
   - when the coverage information of a terminal is reduced to the identifier of the access point associated with the terminal, the access point allocates (625) a transmission time slot to the downlink, within an available time range managed by the network controller $\left(CFP_{free}^{down}(AP_n)\right)$;

- when the coverage information comprises a plurality of access point identifiers, the network controller determines an auxiliary access point among said plurality such that the quality of the downlink between the auxiliary access point and the terminal is maximum, the downlink between the associated access point and the terminal comprising a first link through the wired network between the associated access point and the auxiliary access point and a second downlink between the auxiliary access point and the terminal;

- the network controller allocates a transmission time slot to the second downlink between the auxiliary access point and the terminal, within an available time range $\left(CFP_{free}^{down}(AP_n)\right)$ and at the same time eliminates the time slot thus allocated from available time ranges of access points belonging to the coverage information.

4. Method of allocating transmission time slots in an optical wireless system comprising a plurality of access points connected to a wired network and controlled by a network controller, and a plurality of terminals, **characterised in that**:

   - one access point among said plurality of access points is associated with each terminal, such that the quality of the downlink between this access point and said terminal is maximum;
   - each access point determines (650) reception information containing terminal identifiers received by the access point and quality indicators of the uplink with these terminals, said reception information being transmitted to the network controller;
   - when the identifier of a terminal only appears in the reception information of the access point associated with it, this access point allocates (665) a transmission time slot to the uplink, within an available time range managed by the network controller ($CFP_{free}^{up}(AP_n)$);
   - when a terminal identifier appears in a plurality of items of access point reception information, the network controller determines an auxiliary access point among said plurality such that the quality of the uplink between the terminal and this auxiliary access point is maximum, the uplink between the terminal and the associated access point comprising a first uplink between the terminal and the auxiliary access point and a second link in the wired network between the auxiliary access point and the associated access point.

5. Method of allocating transmission time slots in an optical wireless system according to one of the above claims, **characterised in that** said optical system complies with IEEE standard 802.15.7.

100

110

DL

120

FIG. 1A

100

110

UL

120

FIG. 1B

250

210

230

FIG. 2

225

| BP | CAP | CFP | | | | | |
|----|-----|-----|-----|-----|-----|-----|-----|
| - - - | | GTS | GTS | GTS | GTS | GTS | GTS |

FIG. 3

AP₁    AP₂    AP₃

FIG. 4A

AP₄    AP₅    AP₆

FIG. 4B

BP    CAP    CFP

| AP₁ | | | | GTS | GTS | GTS | GTS | GTS | GTS |
| AP₂ | | | | GTS | GTS | GTS | GTS | GTS | GTS |
| AP₃ | | | | GTS | GTS | GTS | GTS | GTS | GTS |
| AP₄ | | | | GTS | GTS | GTS | GTS | GTS | GTS |
| AP₅ | | | | GTS | GTS | GTS | GTS | GTS | GTS |
| AP₆ | | | | GTS | GTS | GTS | GTS | GTS | GTS |

FIG. 4C

détection des interferences entre points d'accès sur voie montante/ descendante ⌐510

détermination de la matrice d'interférence entre points d'accès ⌐520

obtention du graphe des incompatibilités ⌐530

allocation par le contrôleur de réseau à chaque point d'accès de degré non nul d'un intervalle de transmission de signaux de contrôle sur la voie descendante ⌐540

chaque point d'accès de degré nul alloue un intervalle de transmission de signaux de contrôle sur la voie descendante, indépendamment des autres points d'accès ⌐550

# FIG. 5

```
┌──────────────────────────────────────────┐
│  détermination de l'information de         │   610
│  couverture par le terminal                │
└──────────────────────────────────────────┘
```

$$610$$

l'info de couverture se réduit elle au point d'accès associé ?

$$620$$

N

$$630$$

allocation d'un intervalle de transmission par le contrôleur de réseau dans la plage temporelle

$$CFP_{free}^{down}(AP_n)$$

Y

$$625$$

allocation d'un intervalle de transmission par le point d'accès associé dans la plage

$$CFP_{free}^{down}(AP_n)$$

amputation des plages temporelles

$$CFP_{free}^{down}(AP_m)$$

de l'intervalle de transmission alloué pour tous les points d'accès $AP_m$ appartenant à l'information de couverture

$$640$$

# FIG. 6A

```
┌─────────────────────────────────────────┐
│ détermination de l'information de réception par │─── 650
│           chaque point d'accès            │
└─────────────────────────────────────────┘
                    │
                    ▼
            ╱─────────────────╲
           ╱  le terminal n'apparait-il ╲        660
          ╱    que dans l'info de        ╲
          ╲    réception du point        ╱
           ╲   d'accès associé ?        ╱
            ╲─────────────────╱
         N  │                    │  Y
            ▼          670        ▼         665
┌─────────────────────────┐  ┌─────────────────────────┐
│ allocation par le contrôleur de │  │ allocation par le point d'accès │
│ réseau à la liaison montante d'un │  │ associé  à la liaison montante │
│ intervalle de transmission dans la │  │    d'un intervalle de       │
│      plage temporelle      │  │  transmission dans la plage │
│     $CFP_{free}^{up}(AP_n)$     │  │     $CFP_{free}^{up}(AP_n)$     │
└─────────────────────────┘  └─────────────────────────┘
            │
            ▼
┌─────────────────────────────────────────┐
│   amputation des plages temporelles       │─── 680
│          $CFP_{free}^{up}(AP_m)$            │
│ de l'intervalle de transmission alloué pour │
│ tous les points d'accès  $AP_m$ contenant le │
│  terminal dans l'information de réception   │
└─────────────────────────────────────────┘
```

# FIG. 6B

DL: $B_1$, $B_2$, $B_3$ (BP)

CAP

CFP:
- LAP$_1$: $\text{CFP}^{down}_{free}(\text{LAP}_1)$ | DL GTS $D_1$
- LAP$_2$: $\text{CFP}^{down}_{free}(\text{LAP}_2)$
- LAP$_3$: DL GTS $D_2$

$T^{DL}_{N-1}$, $T^{DL}_N$

UL: $D_1$ (BP), $D_2$

- LAP$_1$: $\text{CFP}^{up.}_{free}(\text{LAP}_1)$ | UL GTS $D_1$
- LAP$_2$: $\text{CFP}^{up.}_{free}(\text{LAP}_2)$
- LAP$_3$: UL GTS $D_2$

$T^{UL}_N$

FIG. 7

FIG. 8

FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20110105134 A1

- US 20110217044 A

**Littérature non-brevet citée dans la description**

- Fractional frequency reuse in optical wireless cellular network. **C. CHEN et al.** Proc. of the 2013 24th International Symposium on Personal. Indoor and Mobile Radio Communications, 3594-3598

- **S. RAJAGOPAL et al.** IEEE 802.15.7 VLC PHY/MAC proposal-Samsung ETRI. *IEEE Standard,* 31 Octobre 2009